# EUROPEAN PATENT APPLICATION

(11) **EP 4 852 553 A1**
(43) Date of publication of application: **09.12.2026**
(21) Application number: 25757642.1
(22) Date of filing: 11.02.2025
(51) Int. Cl.: H04W 68/02

(54) **COMMUNICATION METHOD AND COMMUNICATION APPARATUS**

(30) Priority: 23.02.2024 CN 202410202644
(71) Applicant: HUAWEI TECHNOLOGIES CO., LTD., Shenzhen, Guangdong 518129 (CN)
(72) Inventor: HE, Hongli, Shenzhen, Guangdong 518129 (CN); LI, Xueru, Shenzhen, Guangdong 518129 (CN)
(74) Representative: Huawei European IPR
(86) International application number: PCT/CN2025/076831
(87) International publication number: WO 2025/176046

(57) **Abstract**

This application provides a paging method and a communication apparatus. The method includes: A sensing function network element sends first information to a network device, where the first information includes information about a first location and/or information about a first cell, the first location is a location or a potential location of a terminal device, and the first cell is a camped cell or a potential camped cell of the terminal device. Because the first information is determined based on a sensing result, the network device can obtain the information even when the terminal device is in an idle state or an inactive state. In this way, the network device can make communication decisions for the terminal device, for example, determining an access network device to page the terminal device, thereby improving communication efficiency.

## Description

This application claims priority to Chinese Patent Application No. 202410202644.2, filed with the China National Intellectual Property Administration on February 23, 2024 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a paging method and a communication apparatus.

### BACKGROUND

In current communication technologies, a terminal device may operate in three states: a connected state, an idle state, and an inactive state. A terminal device in the inactive state is usually disconnected from an access network but remains connected to a core network. A terminal device in the idle state is usually disconnected from both the access network and the core network.

Because a terminal device still exhibits mobility in the idle state or the inactive state, when the access network or the core network needs to communicate with the terminal device, determining related information such as the location of the terminal device is critical to communication efficiency.

### SUMMARY

This application provides a communication method to obtain location information of a terminal device, thereby improving communication efficiency.

According to a first aspect, a communication method is provided. The method may be performed by a sensing function network element, or may be performed by a component (for example, a chip, a circuit, or a chip system) of the sensing function network element. For ease of understanding, descriptions are provided below by using an example in which the method is performed by the sensing function network element.

The method includes: receiving a first message from a network device, where the first message is used to obtain location information of a terminal device; and sending first information to the network device, where the first information is determined based on a sensing result, and the first information includes at least one of the following: information about a first location, where the first location is a location or a potential location of the terminal device; and information about a first cell, where the first cell is a camped cell or a potential camped cell of the terminal device.

Based on the foregoing technical solution, the network device may obtain information such as the location, the potential location, the camped cell, and the potential camped cell of the terminal device from the sensing function network element. Because the information is determined based on the sensing result, the network device can obtain the information even when the terminal device is in an idle state or an inactive state. Therefore, the network device can make communication decisions for the terminal device, thereby improving communication efficiency.

Optionally, the terminal device is in the idle state or the inactive state.

With reference to the first aspect, in some implementations of the first aspect, that the first information is determined based on the sensing result includes: the first information is determined based on a location of a first target, where the location of the first target is determined based on the sensing result, and the first target is associated with the terminal device.

With reference to the first aspect, in some implementations of the first aspect, the method further includes: receiving first association information from a first access network device, where the first association information indicates that the first target is associated with the terminal device. The first access network device is configured to sense the first target.

Optionally, the first access network device is further configured to provide an access service for the terminal device before the terminal device enters the idle state or the inactive state.

Based on the foregoing solution, the sensing function network element receives an association relationship between the first terminal device and the target, to provide a basis for subsequent communication decision-making of the sensing function network element.

With reference to the first aspect, in some implementations of the first aspect, the first association information includes at least one of the following: a probability that the first target is associated with the terminal device, and a correlation between a reflection path coefficient of the first target and channel state information of the terminal device.

With reference to the first aspect, in some implementations of the first aspect, the method further includes: determining, based on the location of the first target and the location of the terminal device, that the first target is associated with the terminal device; and/or determining, based on a velocity of the first target and a velocity of the terminal device, that the first target is associated with the terminal device; and/or determining, based on a reflection path coefficient of the first target and channel state information of the terminal device, that the first target is associated with the terminal device.

Based on the foregoing solution, the sensing function network element may obtain the location, the velocity, the CSI, and the like of the terminal device and the location, the velocity, the reflection path coefficient, and the like of the target, to determine that the terminal device is associated with the target, and provide a basis for subsequent communication decision-making of the sensing function network element.

With reference to the first aspect, in some implementations of the first aspect, the method further includes: receiving the channel state information from the terminal device or a first access network device.

The first access network device is configured to provide an access service for the terminal device before the terminal device enters the idle state or the inactive state.

With reference to the first aspect, in some implementations of the first aspect, the method further includes: sending a second message to the network device, where the second message is used to page the terminal device, and indicates the terminal device to send or receive a reference signal, and the reference signal is used to determine that the first target is associated with the terminal device.

Based on the foregoing solution, the sensing function network element may also determine, by indicating the terminal device to send or receive the reference signal, that the terminal device is associated with the first target, to provide a basis for subsequent communication decision-making of the sensing function network element.

With reference to the first aspect, in some implementations of the first aspect, the sending the second message to the network device includes: sending the second message to the network device when an association probability between a target associated with the terminal device and the terminal device is less than a first threshold.

With reference to the first aspect, in some implementations of the first aspect, the first information includes first probability information and/or second probability information, the first probability information indicates a probability that the terminal device is located at the first location, and the second probability information indicates a probability that the terminal device is located in the first cell.

Based on the foregoing solution, the first information may include the first probability information and/or the second probability information, so that the network device can obtain the probability that the terminal device is located at the first location and/or in the first cell, thereby facilitating communication decision-making of the network device.

Optionally, the first information is sent to the network device in either one of the following cases: a change in the location of the terminal device is greater than a second threshold; or the camped cell of the terminal device has changed.

According to a second aspect, a communication method is provided. The method may be performed by a network device, or may be performed by a component (for example, a chip, a circuit, or a chip system) of the network device. For ease of understanding, descriptions are provided below by using an example in which the method is performed by the network device.

The method includes: sending a first message to a sensing function network element, where the first message is used to obtain location information of a terminal device; and receiving first information from the sensing function network element, where the first information includes at least one of the following: information about a first location, where the first location is a location or a potential location of the terminal device; and information about a first cell, where the first cell is a camped cell or a potential camped cell of the terminal device.

Based on the foregoing technical solution, the network device may obtain information such as the location, the potential location, the camped cell, and the potential camped cell of the terminal device from the sensing function network element. Because the information is determined based on the sensing result, the network device can obtain the information even when the terminal device is in an idle state or an inactive state. Therefore, the network device can make communication decisions for the terminal device, thereby improving communication efficiency.

With reference to the second aspect, in some implementations of the second aspect, the method further includes: determining to initiate paging for the terminal device; and determining a second access network device based on the first information, where the second access network device is configured to page the terminal device.

Based on the foregoing solution, the network device may determine, based on the first information, the access network device that pages the terminal device. Compared with a solution in which paging is first performed in a small range and then performed in a large range, paging efficiency can be improved.

With reference to the second aspect, in some implementations of the second aspect, the method further includes: sending direction information to the second access network device, where the direction information indicates a direction of a beam used when the second access network device pages the terminal device.

In this way, a paging delay can be reduced, and paging efficiency can be improved.

With reference to the second aspect, in some implementations of the second aspect, the method further includes: receiving a second message from the sensing function network element, where the second message is used to page the terminal device, and indicates the terminal device to send or receive a reference signal, and the reference signal is used to determine that a first target is associated with the terminal device; and sending a paging message to a third access network device, where the paging message is used to page the terminal device, and indicates the terminal device to send or receive the reference signal.

With reference to the second aspect, in some implementations of the second aspect, the first information includes first probability information and/or second probability information, the first probability information indicates a probability that the terminal device is located at the first location, and the second probability information indicates a probability that the terminal device is located in the first cell.

According to a third aspect, a communication method is provided. The method includes: A network device sends a first message to a sensing function network element, where the first message is used to obtain location information of a terminal device. The network device receives first information from the sensing function network element, where the first information includes at least one of the following: information about a first location, where the first location is a location or a potential location of the terminal device; and information about a first cell, where the first cell is a camped cell or a potential camped cell of the terminal device.

According to a fourth aspect, this application provides a communication apparatus. The communication apparatus has a function of implementing the first aspect. For example, the communication apparatus includes a corresponding module, unit, or means (means) for performing an operation in the first aspect. The module, unit, or means may be specifically implemented by software, or implemented by hardware, or implemented by a combination of software and hardware.

The apparatus may be a sensing function network element, or may be a component (for example, a chip, a circuit, or a chip system) of the sensing function network element. Specifically, the apparatus includes: a transceiver unit, configured to receive a first message from a network device, where the first message is used to obtain location information of a terminal device; and the transceiver unit is further configured to send first information to the network device, where the first information is determined based on a sensing result, and the first information includes at least one of the following: information about a first location, where the first location is a location or a potential location of the terminal device; and information about a first cell, where the first cell is a camped cell or a potential camped cell of the terminal device.

Optionally, the terminal device is in an idle state or an inactive state.

Optionally, that the first information is determined based on the sensing result includes: the first information is determined based on a location of a first target, where the location of the first target is determined based on the sensing result, and the first target is associated with the terminal device.

With reference to the fourth aspect, in some implementations of the fourth aspect, the transceiver unit is further configured to receive first association information from a first access network device, where the first association information indicates that the first target is associated with the terminal device. The first access network device is configured to sense the first target.

Optionally, the first access network device is further configured to provide an access service for the terminal device before the terminal device enters the idle state or the inactive state.

With reference to the fourth aspect, in some implementations of the fourth aspect, the first association information includes at least one of the following: a probability that the first target is associated with the terminal device, and a correlation between a reflection path coefficient of the first target and channel state information of the terminal device.

With reference to the fourth aspect, in some implementations of the fourth aspect, the apparatus further includes: a processing unit, configured to determine, based on the location of the first target and the location of the terminal device, that the first target is associated with the terminal device; and/or determine, based on a velocity of the first target and a velocity of the terminal device, that the first target is associated with the terminal device; and/or determine, based on a reflection path coefficient of the first target and channel state information of the terminal device, that the first target is associated with the terminal device.

With reference to the fourth aspect, in some implementations of the fourth aspect, the transceiver unit is further configured to receive the channel state information from the terminal device or a first access network device.

The first access network device is configured to provide an access service for the terminal device before the terminal device enters the idle state or the inactive state.

With reference to the fourth aspect, in some implementations of the fourth aspect, the transceiver unit is further configured to send a second message to the network device, where the second message is used to page the terminal device, and indicates the terminal device to send or receive a reference signal, and the reference signal is used to determine that the first target is associated with the terminal device.

With reference to the fourth aspect, in some implementations of the fourth aspect, the transceiver unit is specifically configured to send the second message to the network device when an association probability between a target associated with the terminal device and the terminal device is less than a first threshold.

With reference to the fourth aspect, in some implementations of the fourth aspect, the first information includes first probability information and/or second probability information, the first probability information indicates a probability that the terminal device is located at the first location, and the second probability information indicates a probability that the terminal device is located in the first cell.

Optionally, the first information is sent to the network device in either one of the following cases: a change in the location of the terminal device is greater than a second threshold; or the camped cell of the terminal device has changed.

According to a fifth aspect, this application provides a communication apparatus. The communication apparatus has a function of implementing the second aspect. For example, the communication apparatus includes a corresponding module, unit, or means (means) for performing an operation in the second aspect. The module, unit, or means may be specifically implemented by software, or implemented by hardware, or implemented by a combination of software and hardware.

The apparatus may be a network device, or may be a component (for example, a chip, a circuit, or a chip system) of the network device. Specifically, the apparatus includes: a transceiver unit, configured to send a first message to a sensing function network element, where the first message is used to obtain location information of a terminal device; and the transceiver unit is further configured to receive first information from the sensing function network element, where the first information includes at least one of the following: information about a first location, where the first location is a location or a potential location of the terminal device; and information about a first cell, where the first cell is a camped cell or a potential camped cell of the terminal device.

With reference to the fifth aspect, in some implementations of the fifth aspect, the apparatus further includes a processing unit, configured to: determine to initiate paging for the terminal device; and determine a second access network device based on the first information, where the second access network device is configured to page the terminal device.

With reference to the fifth aspect, in some implementations of the fifth aspect, the transceiver unit is further configured to send direction information to the second access network device, where the direction information indicates a direction of a beam used when the second access network device pages the terminal device.

With reference to the fifth aspect, in some implementations of the fifth aspect, the transceiver unit is further configured to: receive a second message from the sensing function network element, where the second message is used to page the terminal device, and indicates the terminal device to send or receive a reference signal, and the reference signal is used to determine that the first target is associated with the terminal device; and send a paging message to a third access network device, where the paging message is used to page the terminal device, and indicates the terminal device to send or receive the reference signal.

With reference to the fifth aspect, in some implementations of the fifth aspect, the first information includes first probability information and/or second probability information, the first probability information indicates a probability that the terminal device is located at the first location, and the second probability information indicates a probability that the terminal device is located in the first cell.

According to a sixth aspect, this application provides a communication apparatus. The communication apparatus includes an interface circuit and one or more processors. The one or more processors are coupled to a memory. The memory is configured to store a part or all of a computer program or instructions necessary for implementing the functions in the first aspect or the second aspect. The one or more processors may execute the computer program or instructions. When the computer program or instructions are executed, the communication apparatus is caused to implement the method in any possible design or implementation of the first aspect or the second aspect. The interface circuit is configured to implement a communication function in the communication apparatus and/or a communication function between the communication apparatus and another apparatus or component.

In a possible design, the processor is configured to communicate with the another apparatus or component through the interface circuit.

In a possible design, the communication apparatus may further include the memory.

The communication apparatus may be a sensing function network element, a module (for example, a circuit, a chip, or a chip system) in the sensing function network element, or a logical node, a logical module, or software that can implement all or some functions of an access network device. Alternatively, the communication apparatus may be a network device, a module (for example, a circuit, a chip, or a chip system) in the network device, or a logical node, a logical module, or software that can implement all or some functions of the network device.

According to a seventh aspect, this application provides a communication system. The communication system may include the communication apparatuses according to the fourth aspect and the fifth aspect.

According to an eighth aspect, this application provides a computer-readable storage medium. The computer-readable storage medium stores computer-readable instructions. When a computer reads and executes the computer-readable instructions, the computer is caused to perform the method according to any one of the possible designs of the first aspect and the second aspect.

According to a ninth aspect, this application provides a computer program product. When a computer reads and executes the computer program product, the computer is caused to perform the method according to any one of the possible designs of the first aspect and the second aspect.

It should be understood that, for beneficial effects of the third aspect to the ninth aspect, refer to any one of the first aspect and the second aspect and the possible implementations of the first aspect and the second aspect. Details are not described herein again.

### BRIEF DESCRIPTION OF DRAWINGS

FIG. 1 is a diagram of a network architecture to which embodiments of this application are applicable;
FIG. 2 and FIG. 3 are schematic flowcharts of paging;
FIG. 4 is a schematic flowchart of a communication method 400 according to this application;
FIG. 5 is a diagram of an application scenario according to an embodiment of this application;
FIG. 6 is a schematic flowchart of a communication method 600 according to this application;
FIG. 7 is a schematic flowchart of a communication method 700 according to this application;
FIG. 8 is a block diagram of a communication apparatus according to an embodiment of this application;
FIG. 9 is a diagram of another communication apparatus according to an embodiment of this application; and
FIG. 10 is a diagram of a chip system according to an embodiment of this application.

### DESCRIPTION OF EMBODIMENTS

The following describes technical solutions of this application with reference to accompanying drawings.

The technical solutions in embodiments of this application may be applied to various communication systems, for example, long term evolution (long term evolution, LTE), 5th generation (5th generation, 5G), new radio (new radio, NR), internet of things (internet of things, IoT), wireless fidelity (wireless-fidelity, Wi-Fi), wireless communication related to the 3rd generation partnership project (3rd generation partnership project, 3GPP), or other wireless communication that may appear in the future, for example, a 6th generation (6th generation, 6G) communication system. This is not limited in this application.

The technical solutions provided in this application may be further applied to machine-type communication (machine-type communication, MTC), a device-to-device (device-to-device, D2D) network, a machine-to-machine (machine-to-machine, M2M) network, an internet of things (internet of things, IoT) network, or another network. The IoT network may include, for example, an internet of vehicles. Communication modes in an internet of vehicles system are collectively referred to as a vehicle to X device (vehicle to X, V2X, where X may represent anything). For example, the V2X may include: vehicle to vehicle (vehicle to vehicle, V2V) communication, vehicle to infrastructure (vehicle to infrastructure, V2I) communication, vehicle to pedestrian communication (vehicle to pedestrian, V2P), or vehicle to network (vehicle to network, V2N) communication.

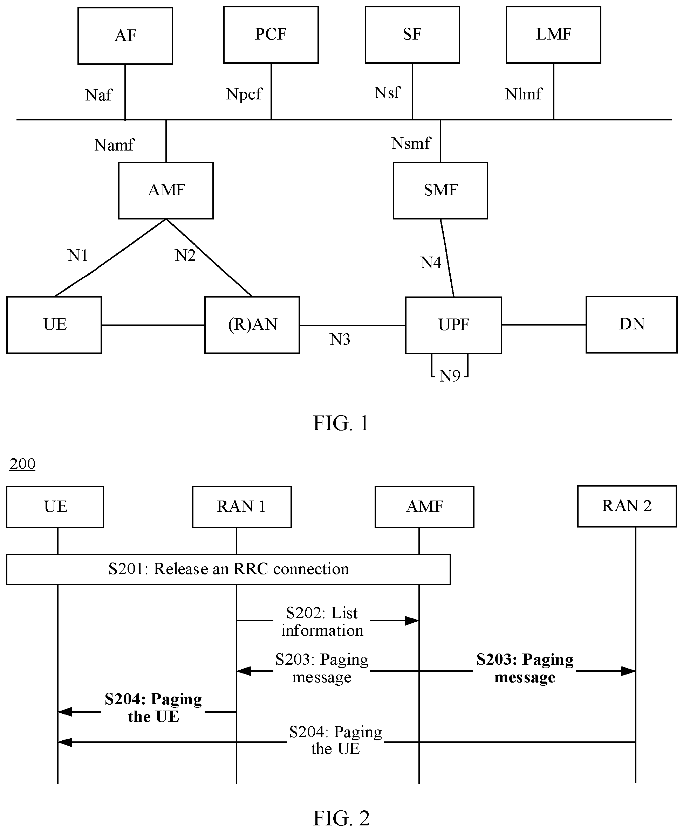

FIG. 1 is a diagram of a network architecture to which embodiments of this application are applicable. As shown in FIG. 1, a 5G system (the 5th generation system, 5GS) is used as an example of the network architecture.

The network architecture may include but is not limited to: a sensing function (sensing function, SF), a location management function (location management function, LMF), a policy control function (policy control function, PCF), an application function (application function, AF), an access and mobility management function (access and mobility management function, AMF), a session management function (session management function, SMF), user equipment (user equipment, UE), a (radio) access network ((radio) access network, (R)AN), a user plane function (user plane function, UPF), and a data network (DN). The DN may be an Internet. The SF, the LMF, the PCF, the AF, the AMF, the SMF, and the UPF are network elements in a core network. Because the 5G system is used as an example in FIG. 1, the core network may be referred to as a 5G core network (5G core network, 5GC or 5GCN).

The following briefly describes the network elements shown in FIG. 1.
1. User equipment (user equipment, UE) may be referred to as a terminal device, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device that has a wireless connection function. Currently, examples of some terminals are as follows: a mobile phone (mobile phone), a tablet computer, a notebook computer, a palmtop computer, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a terminal device in a 5G network, a terminal device in a future evolved public land mobile network (public land mobile network, PLMN), and the like. This is not limited in embodiments of this application.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, in embodiments of this application, the terminal device may alternatively be a terminal device in an IoT system. An IoT is an important part of future information technology development. A main technical feature of the IoT is to connect a thing to a network by using a communication technology, to implement an intelligent network for human-machine interconnection and thing-thing interconnection.

It should be noted that a terminal device and an access network device may communicate with each other by using an air interface technology (for example, a new radio (new radio, NR) technology or an LTE technology). Terminal devices may also communicate with each other by using an air interface technology (for example, an NR technology or an LTE technology).

In embodiments of this application, an apparatus configured to implement a function of the terminal device may be the terminal device, or may be an apparatus that can support the terminal device in implementing the function, for example, a chip system or a chip. The apparatus may be installed in the terminal device. In embodiments of this application, the chip system may include a chip, or may include a chip and another discrete device.

2. A (radio) access network ((radio) access network, (R)AN) may provide a function of accessing a communication network for an authorized user in a specific area, and may specifically include a wireless network device in a 3rd generation partnership project (3rd generation partnership project, 3GPP) network, or may include an access point in a non-3GPP (non-3GPP) network.

The RAN can manage a radio resource and provide an access service to user equipment, to complete forwarding of a control signal and user equipment data between the user equipment and a core network. The RAN may also be understood as a base station in a conventional network.

For example, the access network device in embodiments of this application may be any communication device that has a wireless transceiver function and that is configured to communication with the user equipment. The access network device includes but is not limited to: an evolved NodeB (evolved NodeB, eNB), a baseband unit (baseband unit, BBU), and an access point (access point, AP), a wireless relay node, a wireless backhaul node, a transmission point (transmission point, TP), or a transmission and reception point (transmission and reception point, TRP) in a wireless fidelity (wireless fidelity, Wi-Fi) system, or the like. Alternatively, the access network device may be 5G, for example, NR, a gNB in a system, or a transmission point (TRP or TP), one or a group of antenna panels (including a plurality of antenna panels) of base stations in the 5G system. Alternatively, the access network device may be a network node that forms a gNB or a transmission point, for example, a baseband unit (BBU) or a distributed unit (distributed unit, DU).

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, or an AAU node. In addition, the CU may be classified as an access network device in an access network (radio access network, RAN), or the CU may be classified as an access network device in the core network (core network, CN). This is not limited in this application.

In different systems, the CU (or the CU-CP and the CU-UP), the DU, or the RU may alternatively have different names, but a person skilled in the art may understand meanings of the names. For example, in an open-radio access network (open-radio access network, O-RAN) system, the CU may also be referred to as an open-central unit (open-central unit, O-CU) (open CU), the DU may also be referred to as an open-distributed unit (open-distributed unit, O-DU) (open DU), the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented via a software module, a hardware module, or a combination of a software module and a hardware module.

3. A user plane function (user plane function, UPF) network element is used for packet routing and forwarding, quality of service (quality of service, QoS) handling for user plane data, and the like. User data may be accessed to a data network (data network, DN) through this network element. In embodiments of this application, the user plane function network element may be configured to implement a function of a user plane network element.

4. A data network (data network, DN) is configured to provide a network for data transmission, for example, an operator service network, the Internet (Internet), or a third-party service network.

5. An access and mobility management function (access and mobility management function, AMF) network element is mainly configured for mobility management, access management, and the like, and may further be configured to implement a function other than session management in functions of a mobility management entity (mobility management entity, MME), for example, a function of access authorization/authentication.

6. A session management function (session management function, SMF) network element is mainly configured for session management, allocation and management of Internet protocol (Internet protocol, IP) addresses of terminal devices, selection and management of a user plane function, a termination point of a policy control and charging function interface, downlink data notification, and the like.

7. An application function (application function, AF) supports application influence on data routing, accessing a network exposure function network element, interacting with a policy framework for policy control, and the like.

8. A policy control function (policy control function, PCF) network element is a unified policy framework configured to guide network behavior and provide policy rule information for a network network element (for example, an AMF network element or an SMF network element) or a terminal device.

9. A sensing function (sensing function, SF) network element is a unit responsible for sensing in a network, and is configured to support a sensing service function. For example, an access network device, a terminal device, or the like may be configured to perform a sensing process and report sensing information, and may also provide the sensing information for another node.

10. Location management function (location management function, LMF) is used to support a location service function. In a 5GC, the LMF may be used to provide, to an AMF, location information of UE managed by the AMF.

It should be understood that the network architecture shown in FIG. 1 is merely an example for description, and a network architecture applicable to embodiments of this application is not limited thereto. Any network architecture that can implement functions of the foregoing network elements is applicable to embodiments of this application.

In the foregoing network architecture, an N1 interface is an interface between UE and an AMF. An N2 interface is an interface between a RAN and an AMF network element, and is configured to send a radio parameter, non-access stratum (non-access stratum, NAS) signaling, and the like. An N3 interface is an interface between a RAN and a UPF network element, and is configured to transmit user plane data and the like. An N4 interface is an interface between an SMF network element and a UPF network element, and is configured to transmit information such as a service policy, tunnel identifier information of an N3 connection, data buffer indication information, and a downlink data notification message. An N6 interface is an interface between the DN network element and the UPF network element, and is configured to transmit user plane data and the like.

It should be understood that the network elements and communication interfaces between the network elements in FIG. 1 are briefly described by using names specified in a current protocol or expected names as an example. However, this does not mean that embodiments of this application can be applied only to a currently known communication system. Therefore, a standard name that appears when a current protocol is used as an example for description is a functional description. A specific name of a network element, an interface, signaling, or the like is not limited in this application, and only indicates a function of the network element, the interface, or the signaling, and may be correspondingly extended to another system, for example, a 2G, 3G, 4G, or future communication system.

For example, in a current standardization process, a sensing function network element has not been formally named. In a future network, the sensing function network element may also have another name.

It should be further understood that the AMF, the SMF, the UPF, the PCF, the AF, the SF, the LMF, and the like shown in FIG. 1 may be understood as network elements configured to implement different functions in a core network, for example, may be combined as required to form a network slice. The core network elements may be independent devices, or may be integrated into a same device to implement different functions. Specific forms of the foregoing network elements are not limited in this application. It should be understood that the foregoing network architecture applied to embodiments of this application is merely an example of a network architecture described from a perspective of a conventional point-to-point architecture and a service-based architecture, a network architecture applicable to embodiments of this application is not limited thereto, and any network architecture that can implement functions of the foregoing network elements is applicable to embodiments of this application.

It should be noted that the foregoing network elements may also be referred to as entities, devices, apparatuses, modules, or the like. This is not particularly limited in this application. In addition, in this application, for ease of understanding and description, descriptions of the "network element" are omitted in some descriptions. For example, the LMF network element is referred to as an LMF for short. In this case, the "LMF" should be understood as the LMF network element. Same or similar cases are not described below.

For ease of understanding embodiments of this application, some basic concepts in this application are briefly described.

### 1. Status of a terminal device

The status of the terminal device includes a connection management connected (connection management connected, CM-connected) state and a connection management idle (connection management idle, CM-idle) state. According to whether radio resource control (radio resource control inactive, RRC) is in an active state or an inactive state, the CM-connected state may further include two cases.

In one case, both connection management and RRC are in a connected state, that is, CM-connected with RRC_connected. In this case, both an N2 connection related to UE between an AMF and a RAN and an RRC connection between the RAN and the UE are in a connected state. In this application, this state of the UE is referred to as a connected state for short.

In the other case, connection management is in a connected state, but RRC is in an inactive state, that is, CM-CONNECTED with RRC-inactive. In this case, the N2 connection related to the UE between the AMF and the RAN is in a connected state, but a state of the RRC connection between the RAN and the UE may be understood as an inactive (inactive) state or a disconnected state. In this application, this state of the UE is referred to as a radio resource control inactive (radio resource control inactive, RRC-inactive) state or an inactive state for short.

The CM-idle state means that the N2 connection related to the UE between the AMF and the RAN is in a disconnected state, and the RRC connection between the RAN and the UE is also in a disconnected state. In this application, this state of the UE is referred to as an idle state for short.

### 2. Sensing (sensing)

The sensing may also be referred to as detection. To be specific, parameters of a target in a physical environment, for example, a location of the target and a velocity of the target, are detected. Specifically, a detection system may detect the target by sending sensing information and analyzing an echo signal obtained through reflection by an object.

### 3. Sensing signal

The sensing signal is a signal used for sensing (or detecting) a sensed target (or referred to as a target object, for example, a scatterer). The sensing signal may be a detection signal, a linear frequency modulated signal, a radar signal, a radar sensing signal, a radar detection signal, an environment sensing signal, a pulse signal, a signal in a wireless communication system, or the like.

### 3. Echo signal

The echo signal is a signal generated by reflecting a sensing signal by a target object. For example, a delay of the echo signal relative to the sensing signal may reflect a distance from the target object to a transmitter. Alternatively, a Doppler frequency shift of the echo signal relative to the sensing signal may reflect a velocity of the target object.

### 4. Communication signal

The communication signal is a signal transmitted between communication devices for communication, for example, a signal transmitted between a network device and a terminal device. The communication signal is, for example, a signal carried on a physical downlink shared channel (physical downlink shared channel, PDSCH), for another example, a reference signal between a network device and a terminal device, or a reference signal between terminal devices.

### 5. Sensing mode

For example, according to different sensing signal senders and receivers, sensing modes may be classified into two types: monostatic sensing (which may also be referred to as single-station sensing) and bistatic sensing (which may also be referred to as dual-station sensing). The monostatic sensing means that a device (that is, a sensing transmit end) that sends a sensing signal and a device (that is, a sensing receive end) that receives an echo signal obtained by reflecting the sensing signal by a target are a same device. The bistatic sensing means that a device that sends a sensing signal and a device that receives an echo signal obtained by reflecting the sensing signal by a target are different devices. Nodes participating in sensing may include the sensing transmit end and the sensing receive end.

For example, the sensing mode may be that a base station performs sending and receiving, a base station performs sending and UE performs receiving, UE performs sending and a base station performs receiving, a base station performs sending and another base station performs receiving, UE performs sending and receiving, or UE performs sending and another UE performs receiving.

Optionally, the nodes participating in sensing may further include a sensing initiator. The sensing initiator may also be referred to as a control node, may send a basic parameter of the sensing to the sensing transmit end, and may further send a trigger signal to the sensing receive end. The trigger signal may be used by the sensing receive end to enable a sensing function.

### 6. Paging (paging)

In a cellular network, paging (paging) may be used to enable a network to search for user equipment (user equipment, UE) and send data or control signaling to the UE. Specifically, the paging may include paging initiated by a core network (core network, CN) and paging initiated by a radio access network (radio access network, RAN). The RAN may be understood as a base station in the cellular network.

The paging initiated by the CN may be used by the core network to search for UE in an idle state. Generally, the UE in the idle state is not connected to the RAN and the core network. When receiving data of the UE, the core network needs to find the UE in a network and send data to the UE. The paging initiated by the RAN may be used by the RAN to search for UE in an inactive state. Generally, the UE in the inactive state is still connected to the core network, but is no longer connected to the RAN. When the RAN receives data of the UE, the RAN needs to find the UE and send data to the UE.

FIG. 2 is a schematic flowchart of paging initiated by a CN. As shown in FIG. 2, a procedure 200 includes the following steps.

S201: UE releases an RRC connection.

In other words, the UE enters an idle state.

S202: A RAN 1 sends list information to an AMF.

When the UE releases the RRC connection and enters the idle state, the RAN may provide, to the AMF, list information associated with the UE. The list information includes a recommended cell list and a recommended RAN node list.

S203: The AMF sends a paging message to the RAN 1 and a RAN 2.

When the CN needs to initiate paging, the AMF may preferentially send the paging message of the UE in recommended cells and RAN nodes. For example, in FIG. 2, the RAN nodes include the RAN 1 and the RAN 2.

Specifically, a specific policy may be configured when the AMF pages the UE. For example, the UE is first paged in a small range, and if the paging fails, the UE is paged in a large range, thereby reducing overheads caused by sending the paging message.

S204: The RAN 1 and the RAN 2 page the UE.

Specifically, the RAN 1 and the RAN 2 page the UE based on the paging message from the AMF.

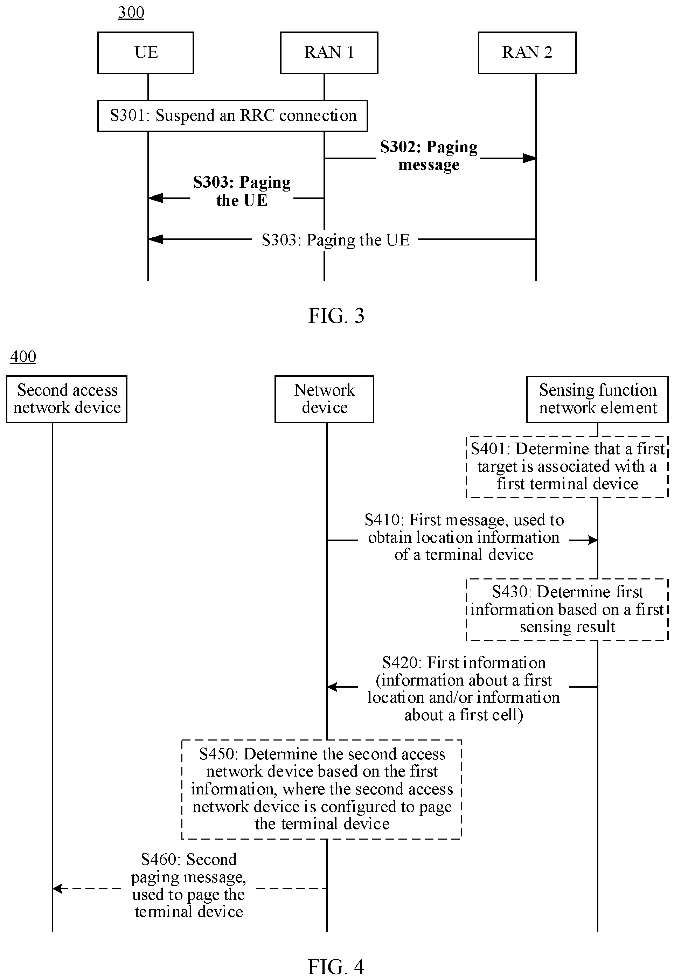

FIG. 3 is a schematic flowchart of paging initiated by a RAN. As shown in FIG. 3, a procedure 300 includes the following steps.

S301: UE suspends an RRC connection.

In other words, the UE enters an inactive state.

S302: A RAN 1 sends a paging message to a RAN 2.

For the UE in the inactive state, a last serving gNB (last serving gNB) of the UE configures a RAN-based notification area (RAN-based notification area, RNA) for the UE, where the RNA includes several cells or RAN nodes. After the UE leaves the RNA, the UE actively enters a connected state, obtains an updated RNA, and then enters the inactive state again.

In FIG. 3, the last serving gNB of the UE is the RAN 1, and RANs in the RNA include the RAN 1 and the RAN 2. When paging the UE in the inactive state, the RAN 1 may send the paging message to the RAN 2 in the RNA through an Xn interface, and search for the UE by using the paging message.

S303: The RAN 1 and the RAN 2 page the UE.

Specifically, the RAN 1 and the RAN 2 page the UE based on the paging message from the RAN 1.

In conclusion, due to mobility of the UE in the idle state or the inactive state, when the UE needs to be paged, the core network or the RAN cannot determine related information such as a location of the UE and needs to indicate a plurality of RAN nodes in a specific area range to send a paging message; or the core network or the RAN first sends the paging message in a small range and then sends the paging message in a large range. Consequently, communication efficiency is low.

In view of this, this application provides a communication method and a communication apparatus, so that related information such as a location of a terminal device can be obtained based on a sensing result, thereby improving communication efficiency.

It should be understood that, in this application, "indicate" may include "directly indicate" and "indirectly indicate". When a piece of indication information is described as indicating A, the indication information may directly indicate A or indirectly indicate A, but it does not necessarily mean that the indication information includes A. Information indicated by the indication information is referred to as to-be-indicated information. In a specific implementation process, there are a plurality of manners of indicating the to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device. The configuration information may be but is not limited to one or a combination of at least two of radio resource control (radio resource control, RRC) signaling, media access control (media access control, MAC) layer signaling, and physical layer signaling. The MAC layer signaling includes, for example, a MAC control element (control element, CE), and the physical layer signaling includes, for example, downlink control information (downlink control information, DCI).

It should be further understood that a specific structure of an entity for performing the method provided in embodiments of this application is not particularly limited in embodiments shown below, provided that the entity can run a program that records code of the method provided in embodiments of this application to perform communication according to the method provided in embodiments of this application. For example, the method provided in embodiments of this application may be performed by a sensing function network element and a network device, or functional modules, in the sensing function network element and the network device, that can invoke and execute programs.

FIG. 4 is a schematic flowchart of a communication method according to this application. As shown in FIG. 4, a method 400 includes the following steps.

S410: A network device sends a first message to a sensing function network element, and correspondingly, the sensing function network element receives the first message.

The first message is used to obtain location information of a first terminal device.

Specifically, the first message may be a request message, and may be used to request the location information of the first terminal device. For example, when the network device needs to learn of the location information of the first terminal device, the network device sends the request message to the sensing function network element. The request message may include an identifier of a first terminal.

For example, when the network device needs to send data, configuration information, or the like to the first terminal device, the network device needs to page the first terminal device and needs to learn of the location information of the first terminal device, and therefore may perform S410.

The first terminal device may be in a first list. When the network device needs to page a terminal device that belongs to the first list, S410 may be performed. The first list may be sent by the sensing function network element to the network device prior to S410. The terminal device in the first list is a terminal device whose location can be continuously tracked by the sensing function network element through sensing.

Specifically, the first message may alternatively be a subscription message, and may be used to subscribe to the location information of the first terminal device. For example, the network device subscribes to the location information of the first terminal device from the sensing function network element in advance, so that the network device can directly use the location information of the first terminal device as needed.

Optionally, if the first message is a subscription message, the sensing function network element may periodically send the location information of the first terminal device to the network device.

Optionally, if the first message is a subscription message, the subscription message may further indicate the sensing function network element to report the location information of the first terminal device to the network device in some cases. Specific cases may include:
Case 1: A change in the location of the first terminal device is greater than a second threshold.
   Optionally, the subscription message may indicate the second threshold.
Case 2: A camped cell or a camped base station of the first terminal device changes.
Case 3: A camped cell or a camped base station of the first terminal device is not a cell or a base station in a list. In this case, the subscription message may indicate the list.
Case 4: A camped cell or a camped base station of the first terminal device is a cell or a base station in a list. In this case, the subscription message may indicate the list.

For example, the subscription message may indicate the sensing function network element to periodically report the location information of the first terminal device to the network device. Optionally, the subscription message may further indicate a periodicity in which the sensing function network element reports the location information of the first terminal device.

For example, the subscription message may include an identifier of the first terminal device (or may further include an identifier of another terminal device), that is, location information of one or more specific terminal devices is subscribed to. Alternatively, the subscription message may not include the identifier of the first terminal device. For example, the network device subscribes to location information of all terminal devices in a specific range from the sensing function network element. The subscription message may include information about an area, and the range may be a range in which the sensing function network element can continuously track locations of the terminal devices.

It should be understood that the location information of the first terminal device may be understood as a specific coordinate value in a coordinate system, or may be understood as a possible camped cell or a possible camped base station (which may also be understood as a RAN) of the first terminal device, that is, a base station or a cell that may provide coverage and communication services for the first terminal device.

For example, the identifier of the first terminal device may be a generic public subscription identifier (generic public subscription identifier, GPSI), a subscription permanent identifier (subscription permanent identifier, SUPI), a permanent equipment identifier (permanent equipment identifier, PEI), or the like. Alternatively, the identifier of the first terminal device may be determined by the network device or the first terminal device.

The network device may be a core network element, for example, an AMF. Alternatively, the network device may be an access network device, for example, a base station or a RAN. When the network device is an access network device, the network device may be a last serving gNB (last serving gNB) of the first terminal device.

Optionally, in this application, the first terminal device may be a terminal device in an idle state or an inactive state. The first terminal device may be one terminal device, or may be a plurality of terminal devices.

Optionally, in this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives, via another entity, the information sent by the entity A. The entities A and B herein each may be a RAN node or a terminal, or may be a module in the RAN node or the terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station. "Sending" may also be understood as "outputting" of a chip interface, for example, outputting from a baseband chip to a radio frequency chip, and "receiving" may also be understood as "inputting" of the chip interface.

S420: The sensing function network element sends first information to the network device, and correspondingly, the network device receives the first information.

The first information includes information about a first location and/or information about a first cell, the first location is a location or a potential location of the first terminal device, and the first cell is a camped cell or a potential camped cell of the first terminal device.

In this application, "potential" may be understood as "possible" or "probable".

It should be understood that the first information may include a plurality of first locations, or may include a plurality of first cells. To be specific, the sensing function network element may send, to the network device, information about a plurality of locations at which the first terminal device may be located and a plurality of camped cells in which the first terminal device may be located.

It should be understood that the first information may further include location information and/or cell information of another terminal device in addition to those of the first terminal device. In other words, the first information may indicate location information and/or cell information of a plurality of terminal devices.

It should be understood that the first location may be a location relative to a reference point, or may be a location in a global coordinate system. The first location may be represented by using coordinates in a Cartesian coordinate system, or may be represented by using an angle and a distance in a polar coordinate system. The first cell may be represented by using a cell global identifier (NR cell global identifier, NCGI), a cell identifier (cell identifier, CI), or the like.

Optionally, the first cell may alternatively be replaced with a first base station, a first RAN node, or the like. The first base station or the first RAN node is a base station or a RAN node corresponding to the camped cell or the potential camped cell of the first terminal device.

The first information is determined based on a first sensing result.

Specifically, the first sensing result may be one or more pieces of information such as a location, a velocity, a direction, and a distance from a reference point of a first target, where the first target is a target associated with the first terminal device; or the first target and the first terminal device are the same, and the first sensing result may be one or more pieces of information such as a location, a velocity, a direction, and a distance from a reference point of the first terminal device.

For example, that the first information is determined based on the first sensing result may mean that the first information is determined based on the location of the first target, and the location of the first target is determined based on the first sensing result.

The following describes the first sensing result and the location of the first target.

Specifically, the first target may also be referred to as a first sensed target, a first scatterer, a first point (in sensing, sensed information may usually be represented by using a location, a coefficient, a velocity, a Doppler frequency, or the like of a point in a point cloud), a first point set, or the like, and the first target is a sensed target associated with the first terminal device. During sensing, a sensing transmit end may send a sensing signal to the sensed target. The sensing signal may directly reach the sensed target, or may reach the sensed target after one or more spatial actions. The spatial action may be one or more of refraction, scattering, reflection, diffraction, or the like. Further, the sensing signal is reflected by the sensed target, and a sensing receive end may receive an echo signal. The sensing receive end performs sensing processing on the received echo signal, to obtain a sensing result. The sensing receive end may process the sensing result, or may report the sensing result to the sensing function network element for processing.

In an implementation, the sensing receive end or the sensing function network element may obtain the location of the first target by processing the first sensing result.

For example, the first sensing result is information such as a distance between the first target and the reference point and a direction of the first target, based on which the location of the first target may be determined.

In another implementation, the first sensing result includes the location of the first target.

It should be understood that, in this application, the first sensing result may include a sensing result of the first target obtained after the first terminal device enters the idle state or the inactive state.

The following describes a relationship between the location of the first target and the first information.

The first target is associated with the first terminal device, and the first information may be determined based on the location of the first target.

Specifically, that the first target is associated with the first terminal device may also be described as follows: There is an association relationship between the first target and the first terminal device, or the first target and the first terminal device have consistency or similarity in location, mobility, motion, or subtle motion features.

For example, the first target is a vehicle, and the first terminal device may be a handheld terminal device of a driver or a passenger on the vehicle, or may be a communication module bound to the vehicle. The communication module may be an apparatus of the vehicle or an apparatus placed on the vehicle.

Optionally, the first target and the first terminal device are a same device.

For example, both the first target and the first terminal device are vehicles.

Based on the foregoing solution, the network device may obtain information such as the location, the potential location, the camped cell, and the potential camped cell of the terminal device from the sensing function network element. Because the information is determined based on the sensing result, the network device can obtain the information even when the terminal device is in the idle state or the inactive state. In this way, the network device can make communication decisions for the terminal device, thereby improving communication efficiency.

Optionally, the method 400 further includes: S430: The sensing function network element determines the first information based on the first sensing result.

Specifically, the sensing receive end may report the first sensing result to the sensing function network element, and the sensing function network element determines the location of the first target based on the first sensing result. Further, because the first target is associated with the first terminal device, the sensing function network element may determine the first information based on the location of the first target.

In this application, the sensing function network element may indicate an access network device and/or a terminal device in a network to sense an environment, and report a sensing result. The sensing result includes information about the first target. The access network device in the network may include a first access network device, that is, an access network device configured to provide an access service for the terminal device before the terminal device enters the idle state or the inactive state, or may include a second access network device, that is, an access network device configured to provide an access service for the terminal device after the terminal device enters the idle state or the inactive state, or may include another access network device. The terminal device in the network may include the first terminal device, or may include another terminal device.

For example, when a device (which may be a terminal device or an access network device) performs self-sending and self-receiving sensing on the first target, a sensing result reported by the device to the sensing function network element may include information about one or more targets, and the one or more targets include the first target. Information about each target may include at least one of the following: a location of the target (which may include a location in a global coordinate system and/or a relative location relative to the device), a velocity of the target (which may include a velocity value and a direction of the velocity of the target and/or a value of a radial velocity relative to the device), a distance of the target relative to the device, an angle of the target relative to the device (which may include an angle in a horizontal direction and/or an angle in a vertical direction), a reflection path coefficient of the target (which may include an amplitude and/or a phase), and the like. The reflection path coefficient may be a coefficient of a delay tap related to the target in a delay domain, a coefficient of a delay tap related to the target in an angle domain, a coefficient of a delay tap related to the target in a delay-angle domain, or the like.

For example, when two devices perform self-sending and other-receiving sensing on the first target, a device A is a device that sends a signal, and a device B is a device that receives an echo signal. The device B may report a sensing result to the sensing function network element by measuring the echo signal. The sensing result may include information about one or more paths, and the one or more paths include a path that is reflected, scattered, or refracted by the first target. Information about each path may include information about a moment of arrival of the path (which may be represented by a duration from a time reference point), an angle of arrival of the path on a device B side (which may include an angle in a horizontal direction and/or an angle in a vertical direction), an angle of departure of the path on a device A side (which may include an angle in a horizontal direction and/or an angle in a vertical direction), and a channel coefficient of the path (for example, a reflection path coefficient of the target).

In addition, the device participating in a sensing process may further report location information, posture information, and the like of the device. For example, when the device reports a relative location between the target and the device, the sensing function network element may determine the location of the target based on the location information of the device and information about the relative location.

In this application, the sensing function network element may indicate a device in the network to perform continuous sensing, so that the location of the first target can be continuously tracked regardless of whether the first terminal device is in a connected state, the idle state, or the inactive state.

In this application, the sensing function network element maintains an association relationship between a target and a terminal device, and the association relationship includes an association between the first target and the first terminal. The terminal device and the target may be in one-to-one correspondence. As shown in Table 1a, UE 1 is associated with a target 1, and UE 2 is associated with a target 2. Alternatively, one target may be associated with a plurality of terminal devices. As shown in Table 1b, a target 1 is associated with UE 1a, UE 1b, and UE 1c, and a target 2 is associated with UE 2a and UE 2b. For example, when the target is a vehicle, a communication module of the vehicle may be used as the UE 1a, and both a passenger and a driver in the vehicle have handheld terminal devices that may be used as the UE 1b and the UE 1c respectively. In this case, the target may be associated with three terminal devices: the UE 1a, the UE 1b, and the UE 1c. Alternatively, one terminal device may correspond to a plurality of targets. As shown in Table 1c, UE 1 is associated with a target 1, a target 2, and a target 3.

**Table 1a**

| Identifier of a terminal device | Identifier of a target |
|---|---|
| UE 1 | Target 1 |
| UE 2 | Target 2 |

**Table 1b**

| Identifier of a target | Identifier of a terminal device |
|---|---|
| Target 1 | UE 1a, UE 1b, and UE 1c |
| Target 2 | UE 2a and UE 2b |

**Table 1c**

| Identifier of a terminal device | Identifier of a target |
|---|---|
| UE 1 | Target 1, target 2, and target 3 |

The target may be identified by using information such as an identifier of the target, an identifier of a point in a point cloud, and a location, a distance, an angle, and a Doppler frequency corresponding to the target or the point cloud. The identifier of the target or the identifier of the point may be allocated by an apparatus reporting sensing information, or may be determined by the sensing function network element.

Optionally, the association relationship maintained by the sensing function network element may further include a probability that the target is associated with the terminal device, for example, as shown in Table 2a and Table 2b.

**Table 2a**

| Identifier of a terminal device | Identifier of a target | Probability |
|---|---|---|
| UE 1 | Target 1 | p1 |
| | Target 3 | p2 |
| | Target 4 | p3 |
| UE 2 | Target 2 | p4 |

**Table 2b**

| Identifier of a target | Identifier of a terminal device | Probability |
|---|---|---|
| Target 1 | UE 1 | p1 |
| | UE 3 | p2 |
| | UE 4 | p3 |
| Target 2 | UE 2 | p4 |

The probability may be represented by a specific probability value, or may be represented by several discrete probability values. For example, the probability is one of {0, 0.2, 0.4, 0.6, 0.8, 1.0}, or may be represented by high, medium, low, or the like in a broader sense.

Optionally, prior to S420, the method 400 further includes: S401: The sensing function network element determines that the first target is associated with the first terminal device.

The following describes specific manners in which the sensing function network element determines that the first target is associated with the first terminal device.

Manner 1: The sensing function network element determines the association relationship between the first target and the first terminal device.

Specifically, the sensing function network element may determine, based on the location of the target and the location of the terminal device, that the target is associated with the terminal device. For example, if the location of the target is similar to or consistent with the location of the terminal device, it may be determined that the target is associated with the terminal device.

The location of the first terminal device may be determined by the sensing function network element. For example, the sensing function network element integrates a positioning function, and may position the first terminal device, to obtain information such as the location and the velocity of the first terminal device. Alternatively, the location of the first terminal device may be obtained by the sensing function network element from a location function network element (for example, a location management function (location management function, LMF)). The location function network element can position the first terminal device, and obtain information such as the location and the velocity of the first terminal device.

For example, the location of the target may be a location relative to a reference point, or may be a location in a global coordinate system. The location of the target may be represented by using coordinates in a Cartesian coordinate system, or may be represented by using an angle and a distance in a polar coordinate system.

Specifically, the sensing function network element may alternatively determine, based on the velocity of the target and the velocity of the first terminal device, that the target is associated with the first terminal device. For example, if the velocity of the target is similar to or consistent with the velocity of the first terminal device, it may be determined that the target is associated with the terminal device.

Similar to the location of the first terminal device, the velocity of the first terminal device may be determined by the sensing function network element, or may be obtained by the sensing function network element from the location function network element.

Specifically, the sensing function network element may alternatively determine, based on the reflection path coefficient of the target and channel state information (channel state information, CSI) of the first terminal device, that the target is associated with the first terminal device. For example, if there is a high correlation between the reflection path coefficient of the target and the CSI of the first terminal device, the sensing function network element determines that the target is associated with the first terminal device. The correlation may be sample correlation coefficients between reflection path coefficients of the target at different moments and direct path coefficients between the first terminal device and the network device at corresponding moments. The direct path coefficient between the first terminal device and the network device may be determined based on the CSI of the first terminal device. The CSI of the first terminal device may be determined by measuring a downlink reference signal by the first terminal device, or may be determined by receiving an uplink reference signal of the first terminal device by the first access network device, or may be determined by measuring a reference signal of another terminal device by the first terminal device, or may be determined by measuring, by another terminal device, a reference signal sent by the first terminal device. The first access network device is an access network device that provides an access service for the first terminal device before the first terminal device enters the idle state or the inactive state. In other words, in the method, another device may measure the CSI of the first terminal device and report the CSI of the first terminal device to the sensing function network element, or the first terminal device determines the CSI of the first terminal device and reports the CSI of the first terminal device to the sensing function network element. The CSI may include a direct path coefficient (which may include an amplitude and/or a phase) between the another device (which may be an access network device or another terminal device) and the first terminal device.

Optionally, the sensing function network element may determine the association relationship between the terminal device and the target by combining two or three of the foregoing methods.

Optionally, the sensing function network element may further determine the first target associated with the first terminal device. For example, if similarity or consistency between the location of the target and the location of the first terminal device is greater than a third threshold, or similarity or consistency between the velocity of the target and the velocity of the first terminal device is greater than a fourth threshold, or the correlation between the reflection path coefficient of the target and the CSI of the first terminal device is greater than a fifth threshold, it may be determined that the target is the first target, that is, the target is the first target associated with the first terminal device.

Based on the foregoing solution, before the terminal device enters the idle state or the inactive state, the sensing function network element may obtain the location, the velocity, the CSI, and the like of the terminal device and the location, the velocity, the reflection path coefficient, and the like of the target, so as to determine that the terminal device is associated with the target, thereby providing a basis for subsequent communication decision-making of the sensing function network element.

Manner 2: The sensing function network element receives the association relationship between the first target and the first terminal device.

Specifically, when a device can sense the first target and can also receive a signal from and send a signal to the first terminal device, the device may determine related sensing information of the first target, and a location, a velocity, CSI, and the like of the first terminal device, and then determine that the first target is associated with the first terminal device. For a determining method, refer to a method for determining the association relationship by the sensing function network element. The device reports first association information to the sensing function network element, where the first association information may indicate that the target is associated with the first terminal device, and the first association information may also be referred to as second information. The device may be the first access network device, or may be another access network device, or may be a terminal device.

For example, the first access network device may sense the location of the first target in a self-sending and self-receiving sensing manner. In addition, the first access network device may determine the location of the first terminal device by receiving a signal from and sending a signal to the first terminal device, then determine, based on consistency between the location of the first target and the location of the first terminal device, that the first target is associated with the first terminal device, and report the association relationship to the sensing function network element.

For example, the first association information may be a correspondence between the target and the first terminal device. For example, the first association information includes content shown in Table 1a, Table 1b, or Table 1c. Optionally, the first association information may further include a probability that the target is associated with the first terminal device. For example, the first association information includes content shown in Table 2a or Table 2b.

Optionally, the first association information may further include a correlation between a reflection path coefficient of the target and the CSI of the first terminal device. For the correlation, refer to the descriptions in Manner 1. Details are not described herein again.

Further, if the first association information includes the probability or the correlation, the sensing function network element may further determine the first target associated with the first terminal device. For example, when the probability that the target is associated with the first terminal device is greater than a sixth threshold, or the correlation between the reflection path coefficient of the target and the SCI of the first terminal device is greater than a seventh threshold, the sensing function network element determines that the target is the first target, that is, the target is the first target associated with the first terminal device.

It should be understood that, when the first association information does not include the probability or the correlation, the sensing function network element may determine all targets that have correspondences with the first terminal device as the first target.

In an implementation, the association relationship between the terminal device and the target may be reported to the sensing function network element as a part of the sensing result, or may be separately reported to the sensing function network element.

Based on the foregoing solution, before the first terminal device enters the idle state or the inactive state, the sensing function network element receives the association relationship between the first terminal device and the target, to provide a basis for subsequent communication decision-making of the sensing function network element.

Optionally, the sensing function network element may further determine the association relationship between the target and the terminal device by combining Manner 1 and Manner 2.

To improve accuracy of the association relationship determined by the sensing function network element, prior to S420, the method 400 further includes the following step S4401 to step S4404.

S4401: The sensing function network element sends a second message to the network device, and correspondingly, the network device receives the second message.

The second message is used to page the first terminal device, and indicates: the first terminal device to send a first reference signal, and a third access network device to receive the first reference signal and report a measurement result of the first reference signal; and/or indicates the third access network device to send a second reference signal, the first terminal device to receive the second reference signal, and the first terminal device to report a measurement result of the second reference signal. The first reference signal or the second reference signal is used to determine that the first target is associated with the first terminal device. The third access network device may include a plurality of access network devices.

Optionally, the second message includes the identifier of the first terminal device.

Optionally, the second message includes configuration information of the first reference signal (for example, a resource on which the first reference signal is located) and/or configuration information of the second reference signal (for example, a resource on which the second reference signal is located).

Optionally, the second message may be directly sent by the sensing function network element to the network device, or may be first sent to another network element (for example, an LMF), and then sent by the another network element to the network device.

Optionally, in step S4401 to step S4404, the first terminal device is in the idle state or the inactive state.

S4402: The network device sends a second paging message to the third access network device, and correspondingly, the third access network device receives the second paging message.

The second paging message is used to page the first terminal device, and indicates the first terminal device to send the first reference signal, or indicates the first terminal device to receive the second reference signal and report the measurement result of the second reference signal.

Optionally, the second paging message may include the configuration information of the first reference signal or the second reference signal, for example, may include a time-frequency domain resource, a sequence, and the like of the first reference signal or the second reference signal.

Optionally, the second paging message may include the identifier of the first terminal device.

The third access network device is determined by the network device. For example, the network device may determine the third access network device based on information such as a location or a potential location of the first terminal device, and a camped cell or a potential camped cell of the first terminal device that are obtained from the sensing function network element last time.

S4403: The first terminal device sends the first reference signal, and the third access network device receives the first reference signal, and/or the third access network device sends the second reference signal, and the first terminal device receives the second reference signal and reports the measurement result of the second reference signal.

The first terminal device may report the measurement result of the second reference signal by using a small packet transmission method. In other words, the first terminal device may not enter an RRC connected state for reporting.

The measurement result of the second reference signal may include at least one of the following: one or more moments of arrival and one or more angles of arrival of the second reference signal that are determined based on the second reference signal, CSI between the network device and the terminal device, and the like.

S4404: The sensing function network element receives third information.

The third information may include at least one of the following: the measurement result, reported by the third access network device, of the first reference signal, and/or the measurement result, reported by the first terminal device, of the second reference signal, and location and/or velocity information, reported by the LMF, of the first terminal device. The measurement result of the first reference signal may include at least one of the following: one or more moments of arrival and one or more angles of arrival of the first reference signal that are determined based on the first reference signal, CSI between the network device and the terminal device, and the like. When the third information includes the location and/or velocity information, reported by the LMF, of the first terminal device, the LMF may first receive the measurement result of the first reference signal from the third access network device, and/or receive the measurement result of the second reference signal from the first terminal device, to determine the location and/or the velocity of the first terminal device, and then report the location and/or velocity information to the sensing function network element.

Optionally, the third information may further include the association relationship between the first terminal device and the first target that is determined by the third access network device. For a specific determining method, refer to the foregoing method for determining the association relationship by the sensing function network element.

S4405: The sensing function network element determines, based on the third information, that the first target is associated with the first terminal device. For a method for determining the association, refer to the foregoing descriptions. Details are not described herein again.

Optionally, when the probability that the target is associated with the first terminal device is less than a first threshold, the sensing function network element may send the second message to the network device, to determine that the first target is associated with the first terminal device.

The probability that the target is associated with the first terminal device may be determined by the sensing function network element, or may be received by the sensing function network element.

For example, in Manner 1, if the similarity or the consistency between the location of the target and the location of the first terminal device is less than the third threshold, or the similarity or the consistency between the velocity of the target and the velocity of the first terminal device is less than the fourth threshold, or the correlation between the reflection path coefficient of the target and the CSI of the first terminal device is less than the fifth threshold, the sensing function network element may determine that the probability that the target is associated with the first terminal device is less than the first threshold. For another example, in Manner 2, if the correlation between the reflection path coefficient of the target and the SCI of the first terminal device is less than a seventh threshold, the sensing function network element may determine that the probability that the target is associated with the first terminal device is less than the first threshold.

It should be understood that, in this application, the first threshold and the sixth threshold may be the same or may be different. This is not limited.

Based on the foregoing solution, after the terminal device enters the idle state or the inactive state, the sensing function network element indicates the terminal device to send or receive a reference signal, so as to more accurately determine that the terminal device is associated with the first target, thereby providing a basis for subsequent communication decision-making of the sensing function network element.

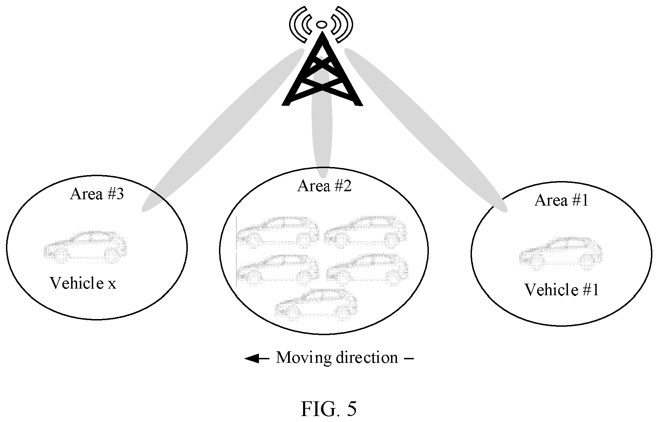

For example, FIG. 5 shows an example of a scenario. As shown in FIG. 5, a target associated with the first terminal device is a vehicle #1, and the first terminal device is a communication module of the vehicle #1. At a moment #1, an environment is open, and only the vehicle #1 exists in an area #1. During sensing, the sensing receive end can clearly determine the vehicle #1 and a location, a velocity, a reflection path coefficient, and the like of the vehicle #1, so that the sensing function network element can easily associate the vehicle #1 with the communication module of the vehicle #1. At a moment #2, the vehicle #1 moves to an area #2 in which a plurality of vehicles exist. At a moment #3, a vehicle (denoted as a vehicle x) in the area #2 moves to an area #3. During sensing, it cannot be determined whether the vehicle x is the vehicle #1, and therefore, a vehicle associated with the communication module of the vehicle #1 cannot be determined. Refer to S4401 to S4405. The sensing function network element may indicate the communication module of the vehicle #1 to send or receive a reference signal, and may further obtain information such as the location, the velocity, and the CSI of the vehicle #1 based on a measurement result of the reference signal, thereby improving accuracy of an association between a target and a terminal.

It should be understood that, in this application, the first access network device, the second access network device, and the third access network device may be a same device, or may be different devices. This is not limited.

Optionally, in this application, the first information further includes first probability information and/or second probability information, the first probability information indicates a probability that the first terminal device is located at the first location, and the second probability information indicates a probability that the first terminal device is located in the first cell.

Specifically, the sensing function network element may determine probabilities that the first terminal device is located at the first location and in the first cell, and indicate the probability information to the network device.

For example, the first information may include content shown in Table 3.

**Table 3**

| Identifier of a terminal device | Location (an example of a first location) | Probability (an example of first probability information) |
|---|---|---|
| UE 1 | Location 1 | a1 |
| | Location 2 | a2 |
| | Location 3 | a3 |
| UE 2 | Location 4 | a4 |

For example, the first information may include content shown in Table 4.

**Table 4**

| Identifier of a terminal device | Cell (an example of a first cell) | Probability (an example of first probability information) |
|---|---|---|
| UE 1 | Cell 1 | b1 |
| | Cell 2 | b2 |
| | Cell 3 | b3 |
| UE 2 | Cell 4 | b4 |

Based on the foregoing solution, the first information may include the first probability information and/or the second probability information, so that the network device can obtain the probabilities that the terminal device is located at the first location and/or in the first cell, thereby facilitating communication decision-making of the network device.

It should be understood that the information about the first cell may be determined by the sensing function network element based on the first location, or may be obtained by the sensing function network element from another core network element. For example, the sensing function network element may send the information about the first location to the AMF, and after determining the information about the first cell, the AMF sends the information about the first cell to the sensing function network element.

Optionally, the method 400 further includes: S450: The network device determines the second access network device based on the first information, where the second access network device is configured to page the first terminal device.

Specifically, when the network device determines that paging needs to be initiated to the first terminal device, the network device may determine the second access network device.

Compared with a solution in which paging is first performed in a small range and then performed in a large range, the foregoing solution in which the network device may determine, based on the first information, the access network device that pages the terminal device can improve paging efficiency.

Optionally, if the first information includes the first probability information and/or the second probability information, the network device may determine the second access network device based on the probability that the first terminal device is located at the first location and/or the probability that the first terminal device is located in the first cell. For example, an access network device corresponding to a location or a cell with a high probability is used as the second access network device.

Optionally, the method 400 further includes: S460: The network device sends a first paging message to the second access network device, where the first paging message is used to page the first terminal device.

Specifically, the first paging message may include the identifier of the first terminal device.

Optionally, the first paging message may include direction information, and the direction information indicates a direction of a beam used when the second access network device pages the first terminal device.

In this way, a paging delay can be reduced, and paging efficiency can be improved.

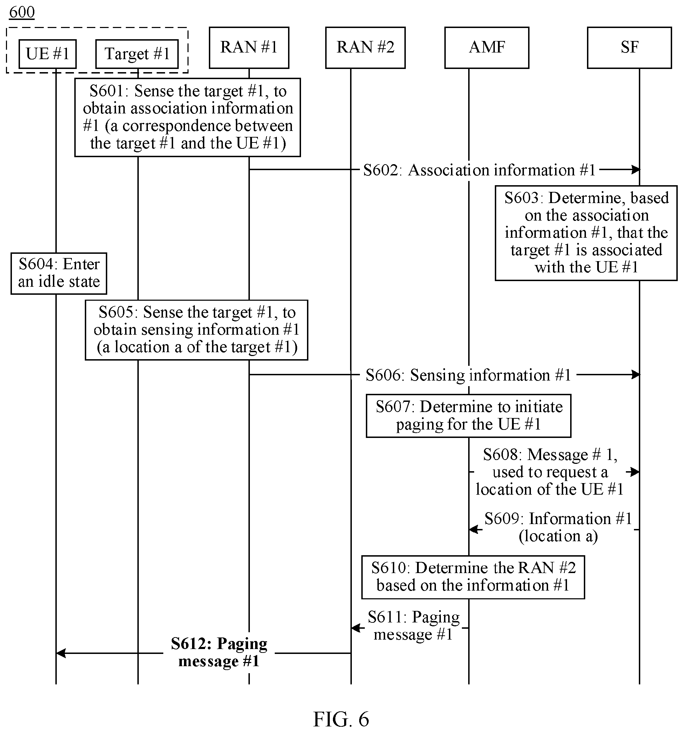

FIG. 6 is a schematic flowchart of a communication method 600 according to this application. The method 600 may be considered as an implementation of the method 400. As shown in FIG. 6, the method 600 includes the following steps.

S601: A RAN #1 (an example of a first access network device) senses a target #1, to obtain association information #1 (an example of first association information).

The association information #1 includes a correspondence between the target #1 and UE #1, and indicates that the target #1 is associated with the UE #1.

S602: The RAN #1 reports the association information #1 to an SF.

S603: The SF determines, based on the association information #1, that the target #1 is associated with the UE #1.

Specifically, S603 may be considered as an implementation of Manner 2 in the method 400.

S604: The UE enters an idle state.

S605: The RAN #1 senses the target #1, to obtain sensing information #1 (an example of a first sensing result).

The sensing information #1 includes a location of the target #1, for example, a location a.

S606: The RAN #1 reports the sensing information #1 to the SF.

It should be understood that the RAN #1 may continuously sense the target #1, and periodically report obtained sensing information to the SF. In other words, S605 and S606 may be repeatedly performed a plurality of times.

S607: An AMF (an example of a network device) determines to initiate paging for the UE #1.

S608: The AMF sends a message #1 (an example of a first message) to the SF.

The message #1 is used to request a location of the UE #1, and the message #1 includes an ID of the UE #1.

S609: The SF sends information #1 (an example of first information) to the AMF.

Specifically, the SF determines that a target associated with the UE #1 is the target #1, and determines, based on the location of the target #1, that a possible location of the UE #1 is the location a.

Further, the SF sends the information #1 to the AMF based on the request in S608, where the information #1 includes the location a.

S610: The AMF determines a RAN #2 (an example of a second access network device) based on the location a.

For example, the AMF determines that the location a belongs to coverage of the RAN #2.

S611: The AMF sends a paging message #1 (an example of a first paging message) to the RAN #2.

The paging message #1 includes the ID of the UE #1.

S612: The RAN #2 sends the paging message #1, to page the UE #1.

Based on the foregoing solution, when a terminal device is in an idle state, the AMF may obtain information such as a location of the terminal device from a sensing function network element, so that the AMF can determine an access network device to page the terminal device. In this way, repeated sending of the paging message can be avoided, and paging efficiency can be improved.

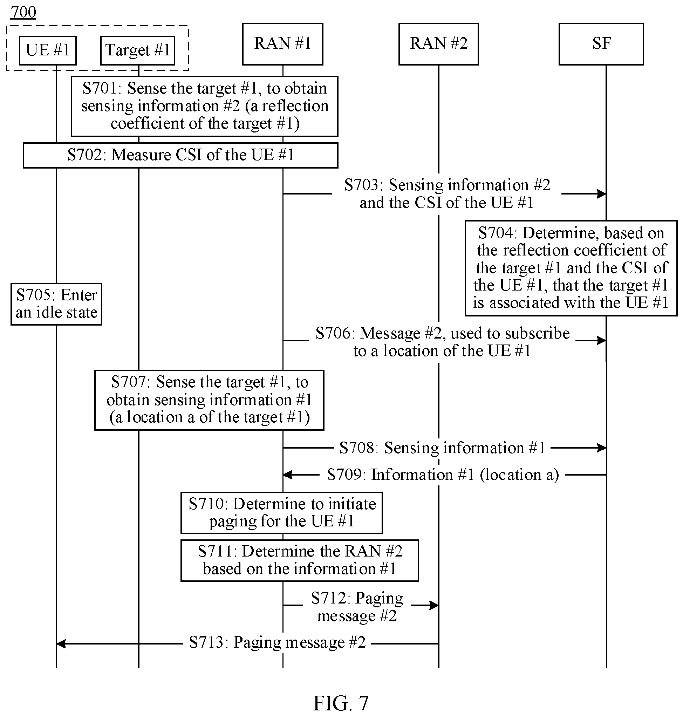

FIG. 7 is a schematic flowchart of a communication method 700 according to this application. The method 700 may be considered as an implementation of the method 400. As shown in FIG. 7, the method 700 includes the following steps.

S701: A RAN #1 (an example of a first access network device, and also an example of a network device) senses a target #1, to obtain sensing information #2 (an example of sensing information).

The sensing information #2 includes a reflection path coefficient of a target #1.

S702: The RAN #1 measures CSI of UE #1.

S703: The RAN #1 reports the sensing information #2 and the CSI of the UE #1 to an SF.

S704: The SF determines that the target #1 is associated with the UE #1.

Specifically, the SF may determine, based on the reflection path coefficient of the target #1 and the CSI of the UE #1, that the target #1 is associated with the UE #1.

Specifically, S704 may be considered as an implementation of Manner 1 in the method 400.

S705: The UE enters an inactive state.

Specifically, the RAN #1 may be understood as a last serving gNB of the UE.

S706: The RAN #1 sends a message #2 (another example of a first message) to the SF.

The message #2 is used to subscribe to a location of the UE #1, and the message #2 includes an ID of the UE #1.

S707: The RAN #1 senses the target #1, to obtain sensing information #1 (an example of a first sensing result).

The sensing information #1 includes a location of the target #1, for example, a location a.

S708: The RAN #1 reports the sensing information #1 to the SF.

It should be understood that the RAN #1 may continuously sense the target #1, and periodically report obtained sensing information to the SF. In other words, S605 and S606 may be performed a plurality of times.

S709: The SF sends information #1 (an example of first information) to the RAN #1.

Specifically, the SF determines, based on the subscription in S706, that the location of the UE #1 needs to be fed back to the RAN #1. When receiving the location of the target #1, the SF determines that a target associated with the UE #1 is the target #1, and therefore determines that a possible location of the UE #1 is the location a.

Further, the SF sends the information #1 to the RAN #1, where the information #1 includes the location a.

S710: The RAN #1 determines to initiate paging for the UE #1.

S711: The RAN #1 determines a RAN #2 (an example of a second access network device) based on the location a.

S712: The RAN #1 sends a paging message #2 (another example of a first paging message) to the RAN #2.

The paging message #2 includes the ID of the UE #1.

S713: The RAN #2 sends the paging message #2, to page the UE #1.

Based on the foregoing solution, when a terminal device is in an inactive state, an access network device may obtain information such as a location of the terminal device from a sensing function network element, so that the access network device can determine an access network device to page the terminal device. In this way, repeated sending of the paging message can be avoided, and paging efficiency can be improved.

It should be understood that sequence numbers of the foregoing processes do not mean execution sequences. The execution sequence of the processes should be determined based on functions and internal logic of the processes, and should not constitute any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

It should be further understood that in some of the foregoing embodiments, a device in a conventional network architecture (for example, a network device or a first terminal device) is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by the device (for example, the network device or the first terminal device) may alternatively be implemented by a component (for example, a chip or a circuit) of the device.

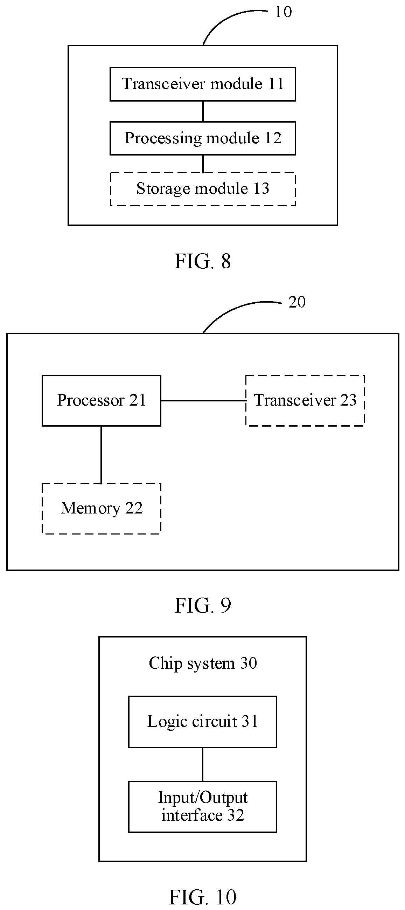

The foregoing describes in detail the communication method provided in embodiments of this application with reference to FIG. 1 to FIG. 7. The following describes in detail a communication apparatus provided in embodiments of this application with reference to FIG. 8 to FIG. 10.

FIG. 8 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing; or the transceiver module 11 is configured to perform receiving and sending-related operations, and the processing module 12 is configured to perform an operation other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to cause the apparatus to implement actions of a device in the foregoing method embodiments.

In a design, the apparatus 10 may correspond to the sensing function network element in the foregoing method embodiments, or may be a component (for example, a chip) of the sensing function network element.

The apparatus 10 may implement corresponding steps or procedures performed by the sensing function network element in the foregoing method embodiments. The transceiver module 11 may be configured to perform receiving and sending-related operations of the sensing function network element in the foregoing method embodiments. The processing module 12 may be configured to perform processing-related operations of the sensing function network element in the foregoing method embodiments.

When the apparatus 10 is configured to perform the method in FIG. 4, the transceiver module 11 may be configured to perform steps of receiving information and sending information in the method, for example, step S410 and step S420; and the processing module 12 may be configured to perform a processing step in the method, for example, step S430.

It should be understood that a specific process in which the units perform the foregoing corresponding steps is described in detail in the foregoing method embodiments. For brevity, details are not described herein again.

In another design, the apparatus 10 may correspond to the network device in the foregoing method embodiments, or a component (for example, a chip) of the network device.

The apparatus 10 may implement corresponding steps or procedures performed by the network device in the foregoing method embodiments. The transceiver module 11 may be configured to perform receiving and sending-related operations of the network device in the foregoing method embodiments. The processing module 12 may be configured to perform processing-related operations of the network device in the foregoing method embodiments.

When the apparatus 10 is configured to perform the method in FIG. 4, the transceiver module 11 may be configured to perform steps of receiving information and sending information in the method, for example, step S410 and step S420; and the processing module 12 may be configured to perform a processing step in the method, for example, step S450.

It should be understood that a specific process in which the units perform the foregoing corresponding steps is described in detail in the foregoing method embodiments. For brevity, details are not described herein again.

It should be further understood that the apparatus 10 herein is embodied in a form of functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described function. In an optional example, a person skilled in the art may understand that the apparatus 10 may be specifically a mobility management network element in the foregoing embodiments, and may be configured to perform procedures and/or steps corresponding to the mobility management network element in the foregoing method embodiments. Alternatively, the apparatus 10 may be specifically the sensing function network element in the foregoing embodiments, and may be configured to perform procedures and/or steps corresponding to the sensing function network element in the foregoing method embodiments. To avoid repetition, details are not described herein again.

The apparatus 10 in the foregoing solutions has a function of performing corresponding steps performed by a device (for example, the sensing function network element and the network device) in the foregoing methods. The function may be implemented by hardware, or may be implemented by hardware executing corresponding software. The hardware or the software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit like the processing module may be replaced with a processor, to separately perform receiving and sending operations and a related processing operation in the method embodiments.

In addition, the transceiver module 11 may alternatively be a transceiver circuit (for example, may include a receiving circuit and a sending circuit), and the processing module may be a processing circuit.

FIG. 9 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the method in the foregoing method embodiments. Optionally, there are one or more processors 21, and further, there are one or more memories 22.

Optionally, as shown in FIG. 9, the apparatus 20 further includes the memory 22, and the memory 22 is configured to store the computer program or the instructions and/or the data. The memory 22 and the processor 21 may be integrated together, or may be disposed separately. Optionally, there are one or more memories 22.

Optionally, as shown in FIG. 9, the apparatus 20 further includes a transceiver 23, and the transceiver 23 is configured to receive and/or send a signal. For example, the processor 21 is configured to control the transceiver 23 to receive a signal and/or send a signal.

In a solution, the apparatus 20 is configured to implement operations performed by the sensing function network element in the foregoing method embodiments.

In another solution, the apparatus 20 is configured to implement operations performed by the network device in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor, or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (a storage module) may be integrated into the processor.

It should further be noted that the memory described in this specification is intended to include, but is not limited to, these memories and any other appropriate type of memory.

FIG. 10 is a diagram of a chip system 30 according to an embodiment of this application. The chip system 30 (which may also be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, to cause the chip system 30 to implement the methods and functions in embodiments of this application. The input/output interface 32 may be an input/output circuit in the chip system 30, and outputs information processed by the chip system 30, or inputs to-be-processed data or signaling information into the chip system 30 for processing.

In a solution, the chip system 30 is configured to implement operations performed by the sensing function network element in the foregoing method embodiments.

For example, the logic circuit 31 is configured to implement processing-related operations performed by the sensing function network element in the foregoing method embodiments, and the input/output interface 32 is configured to implement sending and/or receiving-related operations performed by the sensing function network element in the foregoing method embodiments.

In another solution, the chip system 30 is configured to implement operations performed by the network device in the foregoing method embodiments.

For example, the logic circuit 31 is configured to implement processing-related operations performed by the network device in the foregoing method embodiments, and the input/output interface 32 is configured to implement sending and/or receiving-related operations performed by the network device in the foregoing method embodiments.

An embodiment of this application further provides a computer-readable storage medium. The computer-readable storage medium stores computer instructions for implementing the method performed by a device in the foregoing method embodiments.

For example, when a computer program is executed by a computer, the computer is caused to implement the method performed by the sensing function network element or the network device in the foregoing method embodiments.

An embodiment of this application further provides a computer program product, including instructions. When the instructions are executed by a computer, the method performed by the sensing function network element or the network device in the foregoing method embodiments is implemented.

An embodiment of this application further provides a communication system, including the foregoing sensing function network element and network device.

For explanations and beneficial effects of related content in any one of the apparatuses provided above, refer to the corresponding method embodiment provided above. Details are not described herein again.

A person of ordinary skill in the art may be aware that units and algorithm steps with reference to the examples described in embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In this application, various numbers such as first and second are merely used for differentiation for ease of description, and are not used to limit the scope of embodiments of this application, for example, to distinguish between different messages and different information.

"Predefinition" in this application may be implemented by prestoring corresponding code or a corresponding table in a device, or may be implemented in another manner in which related information may be indicated. A specific implementation of the "predefinition" is not limited in this application.

A "protocol" in this application may be a standard protocol in the communication field, for example, may include a long term evolution (long term evolution, LTE) protocol, a new radio (new radio, NR) protocol, and a related protocol applied to a future communication system. This is not limited in this application.

In this application, words such as "for example", "example", and "in an (another) example" are used to represent giving an example, an illustration, or a description. Any embodiment or design solution described as an "example" in this application should not be explained as being more preferred or having more advantages than another embodiment or design solution.

The terms "include", "have", and their variants in this application all mean "include but are not limited to", unless otherwise specifically emphasized in another manner.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally represents an "or" relationship between the associated objects. At least one of the following items (pieces) or a similar expression thereof indicates any combination of these items, including a single item (piece) or any combination of a plurality of items (pieces). For example, at least one item (piece) of a, b, and c may represent a, b, c, a and b, a and c, b and c, or a, b, and c. Each of a, b, and c may be singular or plural.

In this application, "when" and "if" both mean that a network element performs corresponding processing in an objective situation, but do not constitute a limitation on time, do not require that the network element has a determining action during implementation, and do not mean other limitations either. In addition, in this application, descriptions of the foregoing conditions such as "when" and "if" may be understood as necessary conditions, and whether the conditions are sufficient conditions or whether the conditions are sufficient and necessary conditions is not limited. For example, "performing B when A is met" may be understood as "performing B when at least A is met".

In addition, the network architecture and the service scenario described in embodiments of this application are intended to describe technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving a first message from a network device, wherein the first message is used to obtain location information of a terminal device; and
sending first information to the network device, wherein the first information is determined based on a sensing result, and the first information comprises at least one of the following:
information about a first location, wherein the first location is a location or a potential location of the terminal device; and
information about a first cell, wherein the first cell is a camped cell or a potential camped cell of the terminal device.

2. The method according to claim 1, wherein that the first information is determined based on the sensing result comprises:
the first information is determined based on a location of a first target, wherein the location of the first target is determined based on the sensing result, and the first target is associated with the terminal device.

3. The method according to claim 1 or 2, wherein the method further comprises:
receiving first association information from a first access network device, wherein the first association information indicates that the first target is associated with the terminal device, and the first access network device is configured to sense the first target.

4. The method according to claim 3, wherein the first association information comprises at least one of the following:
a probability that the first target is associated with the terminal device, and a correlation between a reflection path coefficient of the first target and channel state information of the terminal device.

5. The method according to claim 1 or 2, wherein the method further comprises:
determining, based on the location of the first target and the location of the terminal device, that the first target is associated with the terminal device; and/or
determining, based on a velocity of the first target and a velocity of the terminal device, that the first target is associated with the terminal device; and/or
determining, based on a reflection path coefficient of the first target and channel state information of the terminal device, that the first target is associated with the terminal device.

6. The method according to claim 5, wherein the method further comprises:
receiving the channel state information from the terminal device or a first access network device.

7. The method according to any one of claims 1 to 6, wherein the method further comprises:
sending a second message to the network device, wherein the second message is used to page the terminal device and indicates the terminal device to send or receive a reference signal, and the reference signal is used to determine that the first target is associated with the terminal device.

8. The method according to claim 7, wherein the sending the second message to the network device comprises:
sending the second message to the network device when an association probability between a target associated with the terminal device and the terminal device is less than a first threshold.

9. The method according to any one of claims 1 to 8, wherein the first information comprises first probability information and/or second probability information, the first probability information indicates a probability that the terminal device is located at the first location, and the second probability information indicates a probability that the terminal device is located in the first cell.

10. The method according to any one of claims 1 to 9, wherein the first information is sent to the network device in either one of the following cases:
a change in the location of the terminal device is greater than a second threshold; or
the camped cell of the terminal device has changed.

11. A communication method, comprising:
sending a first message to a sensing function network element, wherein the first message is used to obtain location information of a terminal device; and
receiving first information from the sensing function network element, wherein the first information comprises at least one of the following:
information about a first location, wherein the first location is a location or a potential location of the terminal device; and
information about a first cell, wherein the first cell is a camped cell or a potential camped cell of the terminal device.

12. The method according to claim 11, wherein the method further comprises:
determining to initiate paging for the terminal device; and
determining a second access network device based on the first information, wherein the second access network device is configured to page the terminal device.

13. The method according to claim 12, wherein the method further comprises:
sending direction information to the second access network device, wherein the direction information indicates a direction of a beam used when the second access network device pages the terminal device.

14. The method according to any one of claims 11 to 13, wherein the method further comprises:
receiving a second message from the sensing function network element, wherein the second message is used to page the terminal device and indicates the terminal device to send or receive a reference signal, and the reference signal is used to determine that a first target is associated with the terminal device; and
sending a paging message to a third access network device, wherein the paging message is used to page the terminal device and indicates the terminal device to send or receive the reference signal.

15. The method according to any one of claims 11 to 14, wherein the first information comprises first probability information and/or second probability information, the first probability information indicates a probability that the terminal device is located at the first location, and the second probability information indicates a probability that the terminal device is located in the first cell.

16. A communication apparatus, wherein the apparatus comprises a unit configured to perform the method according to any one of claims 1 to 10.

17. A communication apparatus, wherein the apparatus comprises a unit configured to perform the method according to any one of claims 11 to 15.

18. A communication apparatus, comprising a processor, wherein the processor is coupled to a memory, the memory is configured to store a computer program or instructions, and the processor is configured to execute the computer program or the instructions in the memory, to cause the apparatus to perform the method according to any one of claims 1 to 10, or cause the apparatus to perform the method according to any one of claims 11 to 15.

19. A computer-readable storage medium, wherein the computer-readable storage medium stores a computer program or instructions, and when the computer program or the instructions are run on a computer, the computer is caused to perform the method according to any one of claims 1 to 10, or the computer is caused to perform the method according to any one of claims 11 to 15.

20. A chip or a chip system, comprising a processor, configured to invoke a computer program from a memory and run the computer program, to cause a communication device in which the chip system is installed to perform the method according to any one of claims 1 to 10, or cause a communication device in which the chip system is installed to perform the method according to any one of claims 11 to 15.

21. A computer program product, wherein when the computer program product is run on a computer, the computer is caused to perform the method according to any one of claims 1 to 10, or the computer is caused to perform the method according to any one of claims 11 to 15.
